# FASCICULE DE BREVET EUROPEEN

(11) **EP 2 737 231 B1**
(45) Date de publication et mention de la délivrance du brevet: **04.11.2015**
(21) Numéro de dépôt: 12734984.3
(22) Date de dépôt: 21.06.2012
(51) Int. Cl.: F16H 25/20, F02K 1/54, F02K 1/72, F02K 1/76

(54) **ACTIONNEUR LINÉAIRE DOUBLE ACTION**
DOPPELTWIRKENDER LINEARANTRIEB
DOUBLE-ACTING LINEAR ACTUATOR

(30) Priorité: 29.07.2011 FR 1156986
(43) Date de publication de la demande: 04.06.2014
(73) Titulaire: Aircelle, 76700 Gonfreville L'Orcher (FR)
(72) Inventeur: CARUEL, Pierre, F-76600 Le Havre (FR); MORADELL-CASELLAS, Pierre, F-61100 Saint Georges Des Groseillers (FR)
(74) Mandataire: Gaillarde, Frédéric F. Ch.
(86) Numéro de dépôt international: PCT/FR2012/051407
(87) Numéro de publication internationale: WO 2013/017756

(56) Documents cités:
- WO-A1-2007/099333
- DE-U1-202009 007 347
- FR-A1- 2 922 058
- FR-A1- 2 922 059
- FR-A1- 2 922 981

## Description

La présente invention se rapporte à un actionneur linéaire double action destiné à permettre le déplacement d'un premier et d'un second éléments relativement à un élément fixe, ces trois éléments appartenant, en particulier, à un inverseur de poussée pour nacelle de turboréacteur.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt.

Ces dispositifs d'actionnement annexes comprennent notamment un système d'actionnement d'inverseurs de poussée.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Cette nacelle est, généralement, destinée à abriter un turboréacteur double flux apte à générer par l'intermédiaire de pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers une veine annulaire formée entre un carénage du turboréacteur et une paroi interne de la nacelle.

Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur.

Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur.

Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissement visant à découvrir ou recouvrir ces grilles, la translation du capot mobile s'effectuant selon un axe longitudinal sensiblement parallèle à l'axe de la nacelle.

Des portes de blocage complémentaires, activées par le coulissement du capot, permettent généralement une fermeture de la veine en aval des grilles de manière à optimiser la réorientation du flux froid.

Outre sa fonction d'inversion de poussée, le capot coulissant appartient à la section arrière et présente un côté aval formant une tuyère d'éjection de section variable visant à canaliser l'éjection des flux d'air.

Cette tuyère peut venir en complément d'une tuyère primaire canalisant le flux chaud et est alors appelée tuyère secondaire.

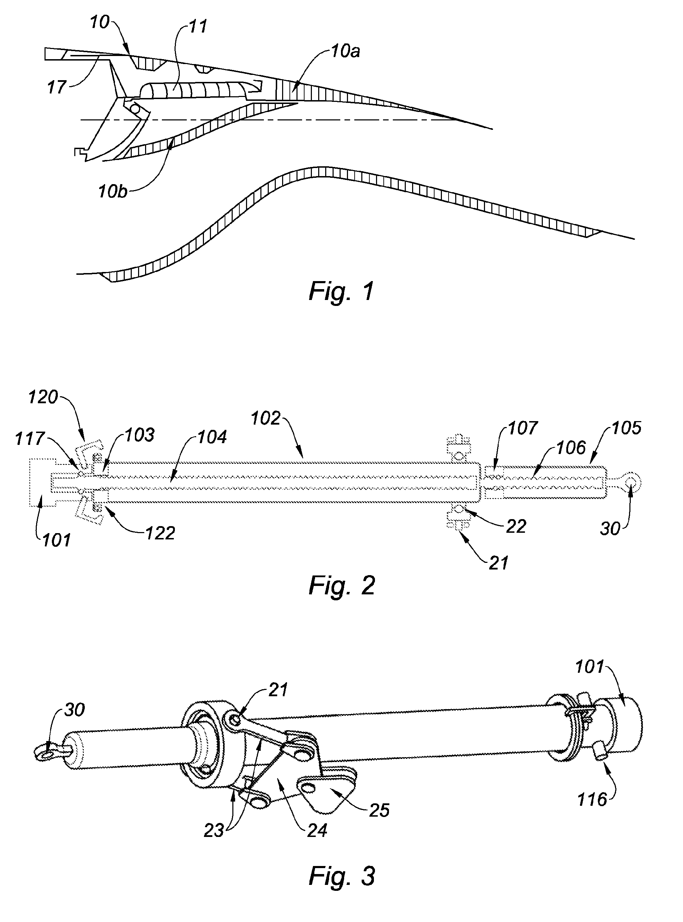

Pour répondre aux problèmes d'adaptation de la section de la tuyère aux diverses phases de vol rencontrées, en particulier les phases de décollage et d'atterrissage de l'avion, on a proposé notamment un inverseur de poussée tel qu'illustré sur la figure 1.

Cet inverseur de poussée comprend, d'une part, des grilles de déviation 11 d'au moins une partie d'un flux d'air du turboréacteur, et d'autre part, au moins un capot 10 mobile en translation selon une direction sensiblement longitudinale de la nacelle apte à passer alternativement d'une position de fermeture dans laquelle il assure la continuité aérodynamique de la nacelle et couvre les grilles de déviation 11, à une position d'ouverture dans laquelle il ouvre un passage dans la nacelle et découvre les grilles de déviation 11.

Le capot mobile 10 comprend une partie externe 10a et une partie interne 10b montées chacune mobile en translation, la partie externe 10a (côté aval du capot 10) forme une tuyère d'éjection visant à canaliser l'éjection des flux d'air.

En divisant le capot mobile 10 en une partie interne 10b et une partie externe 10a déplaçables au moins partiellement indépendamment l'une par rapport à l'autre, il est possible d'adapter aux conditions de vol les positions relatives de la partie externe 10a et de la partie interne 10b de manière à faire varier la section de la tuyère d'éjection formée par le capot mobile 10 en faisant varier la longueur de la ligne aérodynamique interne du capot mobile 10, à la fois lorsque le capot mobile 10 est en position de fermeture et recouvre les grilles de déviation 11, et lorsque le capot mobile 10 est en position d'ouverture.

Un problème récurrent réside dans le système d'actionnement proposé pour assurer une manoeuvre de la tuyère, durant les différentes phases de vol, aussi bien lorsque le dispositif d'inversion de poussée est en phase de jet direct qu'en phase de jet inverse. En effet, un tel système doit pouvoir commander une section de tuyère variable lorsque l'inverseur de poussée est verrouillé en position de fermeture, la tuyère variable étant réciproquement dans une position de déploiement maximum lorsque l'inverseur de poussée est déployé.

On a déjà proposé des vérins électriques télescopiques dans lequel une première tige déplace la partie interne 10b du capot et une deuxième tige, montée coulissante dans la première tige, déplace la partie externe 10a de capot.

Or, cette solution n'est pas optimale : un tel vérin électrique présente, généralement, des difficultés d'actionnement.

En effet, la deuxième tige étant mobile par rapport à la base du vérin, il est difficile de regrouper les moyens d'actionnement dans ladite base du vérin et la deuxième tige doit généralement être équipée de son propre moteur, qui sera donc également mobile.

Pour remédier à ces difficultés d'actionnement, la demande FR 2 922 059 qui montre les caractéristiques du préambule de la revendication 1, propose un actionneur linéaire télescopique double action comprenant une base, destinée à être rattachée à un élément fixe de l'inverseur, et servant de logement à une première tige bloquée en rotation et apte à être entraînée en translation par l'intermédiaire d'un arbre d'entraînement destiné à être relié à des moyens d'entraînement en rotation, la première tige étant destinée à être rattachée par une extrémité à la partie extrême du capot formant tuyère, la première tige supportant une deuxième tige disposée dans le prolongement de celle-ci et destinée à être rattachée par une extrémité au reste du capot à déplacer, ladite deuxième tige étant apte à être bloquée en rotation et entraînée en translation par l'intermédiaire d'un deuxième arbre d'entraînement traversant la base et relié à des moyens d'entraînement en rotation.

Dans cet actionneur, les moyens d'entraînement des tiges comprennent un moteur apte à entraîner un arbre d'entrée d'au moins un différentiel, ledit différentiel présentant, d'une part, un premier arbre de sortie lié à l'un des premier ou deuxième arbres d'entraînement, et d'autre part, un deuxième arbre de sortie lié quant à lui au deuxième ou premier arbre d'entraînement.

Par différentiel, on entend tout moyen mécanique permettant de distribuer une vitesse d'entraînement à une pluralité d'axes de sortie par répartition de l'effort cinématique.

Un tel actionneur, en entraînant les tiges de l'actionneur par l'intermédiaire d'un différentiel, permet de déplacer l'une ou l'autre des parties mobiles du capot par un unique moyen moteur.

De plus, une telle disposition permet de regrouper les moyens d'actionnement des deux tiges de l'actionneur dans la base de ce dernier.

Toutefois, la présence d'un différentiel implique deux chaînes d'entraînement distinctes, une pour chacun des arbres d'entraînement des deux parties du capot.

Par conséquent, la masse, l'encombrement et donc le coût du système d'actionnement restent toujours affectés.

Cet excès de masse est, de plus, néfaste pour les performances du ou des turboréacteurs et les dégrade.

De plus, une telle solution à chaînes d'entraînement multiples est complexe à mettre en oeuvre.

Un but de la présente invention est de remédier aux inconvénients précités des solutions de l'art antérieur.

Ainsi, un but de la présente invention est de proposer un actionneur linéaire double action permettant de simplifier le système d'actionnement d'un inverseur de poussée tout en restant fiable et efficace.

Il est également désirable de proposer un actionneur linéaire double action offrant un gain de masse au système d'actionnement d'un inverseur de poussée relativement aux systèmes existants, diminuant ainsi les coûts et améliorant significativement les performances du turboréacteur de l'ensemble propulsif.

Un autre but de la présente invention est de proposer un actionneur linéaire double action répondant aux exigences des systèmes d'actionnement d'inverseur de poussée à tuyère de section variable : permettre la variation de la section de tuyère lorsque l'inverseur de poussée est verrouillé en position de fermeture.

A cet effet, l'invention propose un actionneur linéaire double action pour déplacer un premier élément et un deuxième élément relativement à un élément fixe, ledit actionneur comprenant :
- un premier élément tubulaire muni de moyens adaptés pour rattacher ledit premier élément tubulaire au premier élément à déplacer,
- un premier arbre d'entraînement, logé dans le premier élément tubulaire susceptible de déplacer le premier élément tubulaire en translation par rapport à l'élément fixe,
- un deuxième élément tubulaire comportant un moyen adapté pour le rattacher au deuxième élément à déplacer et,
- un deuxième arbre d'entraînement, logé dans le deuxième élément tubulaire, susceptible de déplacer le deuxième élément tubulaire en translation par rapport à l'élément fixe.

L'actionneur est remarquable en ce que les deux éléments tubulaires sont montés en série par l'intermédiaire du deuxième arbre d'entraînement qui est monté fixe sur le premier élément tubulaire, de sorte que les deux arbres d'entraînement appartiennent à une même chaîne d'actionnement dans laquelle le deuxième arbre d'entraînement assure le déplacement en translation du deuxième élément tubulaire par rapport au premier élément tubulaire lorsque des moyens de verrouillage du premier élément tubulaire sont en position verrouillée et dans laquelle le premier arbre d'entraînement assure, à la fois, le déplacement en translation du premier élément tubulaire et du deuxième élément tubulaire par rapport à l'élément fixe lorsque les moyens de verrouillage sont en position déverrouillée.

Suivant d'autres caractéristiques optionnelles de l'actionneur selon l'invention, prises seules ou en combinaison :
- l'actionneur comprend une base destinée à être rattachée à l'élément fixe et supportant le premier arbre d'entraînement ;
- le premier arbre d'entraînement est monté mobile en rotation relativement à la base ;
- les moyens de verrouillage sont adaptés pour, en position de verrouillage, interdire toute translation du premier élément tubulaire relativement à la base tout en laissant libre sa rotation par rapport à cette dernière ;
- le moyen adapté pour rattacher le second élément tubulaire au second élément est adapté pour bloquer en rotation le second élément tubulaire ;
- les moyens adaptés pour rattacher ledit premier élément tubulaire au premier élément à déplacer sont adaptés pour autoriser la rotation du premier élément tubulaire ;
- les moyens adaptés pour rattacher ledit premier élément tubulaire au premier élément à déplacer comprennent des pions connectés d'une part au premier élément par l'intermédiaire d'un roulement ou palier à bille et, d'autre part, par un ensemble bielles-palonnier monté sur le premier élément à déplacer ;
- les premier et second arbres d'entraînement sont des vis à billes ;
- les pas des vis à billes peuvent être différents ;
- l'actionneur comprend un moteur d'entraînement unique avec un arbre de sortie unique animant uniquement le premier arbre d'entraînement.

L'invention concerne, en outre, un inverseur de poussée pour nacelle de turboréacteur comprenant, d'une part, des moyens de déviation d'au moins une partie d'un flux d'air du turboréacteur, et d'autre part, au moins un capot mobile en translation selon une direction sensiblement parallèle à un axe longitudinal de la nacelle apte à passer alternativement d'une position de fermeture dans laquelle il assure la continuité aérodynamique de la nacelle et couvre les moyens de déviation, à une position d'ouverture dans laquelle il ouvre un passage dans la nacelle et découvre les moyens de déviation, le capot mobile comprenant au moins une partie extrême formant tuyère, ladite partie étant montée mobile en translation par rapport au reste du capot, remarquable en ce qu'il comprend également un actionneur selon l'invention permettant le déplacement du capot mobile et de la tuyère.

D'autres caractéristiques et avantages de la présente invention apparaîtront à la lumière de la description qui va suivre, et à l'examen des figures ci-annexées, dans lesquelles :
- la figure 1 est une vue partielle schématique en coupe longitudinale d'un inverseur de poussée équipé d'un capot mobile séparé en une partie interne et une partie externe déplaçables l'une par rapport à l'autre ;
- la figure 2 représente schématiquement un actionneur linéaire double action selon un mode de réalisation de la présente invention pouvant notamment et non exclusivement être appliqué à l'inverseur de poussée de la figure figure 1 ;
- la figure 3 est une vue en perspective de l'actionneur de la figure 2 muni de moyens d'attache à un inverseur de poussée, notamment celui de la figure 1 ;
- les figures 4 à 6 représentent, schématiquement, les étapes d'actionnement de l'actionneur linéaire double action durant différentes phases de vol d'un aéronef, à savoir respectivement lors d'une variation de section de tuyère, lors d'une inversion de poussée et lors d'une fermeture de l'inverseur de poussée.

Sur l'ensemble de ces figures, des numéros identiques ou analogues désignent des organes ou ensembles d'organes identiques ou analogues.

On notera que les termes amont et aval s'entendent par rapport à la direction de l'écoulement de l'air dans le turboréacteur.

On notera également que, pour une facilité de compréhension, la description de l'actionneur linéaire double action, selon la présente invention sera faite au regard d'un inverseur de poussée tel qu'illustré en figure 1 et décrit précédemment.

Toutefois, cette application n'est pas limitative.

De tels actionneurs sont destinés à tout inverseur dont le capot mobile est équipé d'une section terminale de tuyère montée mobile relativement au capot de manière à former une tuyère dite variable et, plus généralement, destinés à tout déplacement de premier et second éléments relativement à un élément fixe.

Ainsi, ils sont particulièrement destinés à actionner un capot et une tuyère dont la variation de section de sortie est assurée par l'augmentation géométrique de la section de sortie de la tuyère.

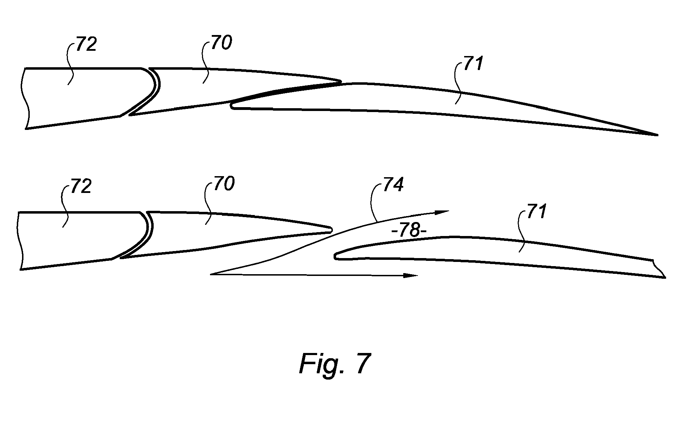

Comme illustré sur la figure 7, ils sont, également, destinés à actionner un capot 70 et une tuyère 71 de section variable, mobiles par rapport à une structure fixe de nacelle 72, la variation de section de sortie de tuyère étant assurée par la formation d'un passage 78 d'air entre le capot 70 et la tuyère 71 créant un écoulement supplémentaire entre le capot 70 et la tuyère 71. Cet écoulement est illustré par les flèches 74.

En référence aux figures 1 à 3, l'actionneur 100 linéaire double action vise à permettre de déplacer la partie interne 10b de capot 10 et la partie externe 10a de capot relativement à un élément fixe, ici un cadre avant fixe 17 de l'inverseur de poussée.

L'actionneur 100 comprend une base 101 prévue pour être rattachée au cadre avant fixe 17 par tout moyen adapté.

Comme illustré sur la figure 3, la base 101 de l'actionneur 100 est reliée au cadre avant 17 par l'intermédiaire d'un cardan (non illustré) relié à la base 101 par deux axes d'entraînement 116 latéraux.

Un premier corps tubulaire 102, formant une première tige de l'actionneur 100, est prévu pour être rattaché à une extrémité à la partie interne 10b du capot 100 qu'il est destiné à entraîner.

Des moyens de fixation à cette partie interne 10b adaptés pour autoriser la rotation du premier corps tubulaire 102 sont prévus.

Dans une variante de réalisation, en référence aux figures 2 et 3 notamment, de tels moyens comprennent des pions latéraux 21 connectés au premier corps 102 par l'intermédiaire d'un roulement ou palier à bille 22.

Chaque pion 21 est, également, connecté par une bielle 23 à un palonnier commun 24, ce palonnier 24 étant fixé sur un élement d'accrochage 25 solidaire de la partie interne 10b du capot 10.

Dans un exemple non limitatif, un tel élement d'accrochage 25 peut être une chape simple ou une double chape 25.

De tels moyens d'attaches du premier corps 102 à la partie interne 10b du capot permettent de reprendre un seul degré de liberté, à savoir la translation axiale suivant l'axe central de la nacelle de sorte qu'on autorise un non-alignement des trois points d'attache de l'actionneur 100 respectivement sur la structure fixe 17 de la nacelle, la partie interne 10b du capot 10 et la partie externe 10a du capot 10 assurant la variation de section de sortie de tuyère

Un premier arbre d'entraînement 104, logé dans le premier corps 102, est susceptible de déplacer le premier corps 102 en translation par rapport au cadre avant 17 fixe.

Dans une variante de réalisation, ce premier arbre d'entraînement 104 est une vis d'entraînement, de type vis à billes.

Le premier corps 102 de l'actionneur 100 comprend, dès lors, tout moyen adapté pour coopérer avec la vis à billes 104, par exemple, un écrou à billes 103.

Le premier arbre d'entraînement 104 est, par ailleurs, destiné à se connecter à la base 101 de l'actionneur, dans laquelle loge son extrémité amont.

L'extrémité amont du premier arbre d'entraînement 104 est montée mobile en rotation dans la base 101 grâce à tout moyen adapté et, par exemple, des roulements 117.

Par ailleurs, un second corps tubulaire 105, formant une seconde tige de l'actionneur 100, est prévu pour être rattaché, à une extrémité aval, à la partie externe 10a du capot 10 qu'il est destiné à entraîner pour réaliser la variation de section de sortie de tuyère.

Des moyens 30 sont adaptés pour bloquer en rotation le second corps 105.

Le second corps 105 est ainsi muni, à son extrémité aval, d'une rotule de fixation 30 et une chape solidaire destinée à coopérer avec la partie externe 10a du capot, liaison n'autorisant pas la rotation du corps 105.

Tout autre dispositif permettant d'empêcher la rotation du corps 105 peut être envisagé.

Un second arbre d'entraînement 106, logé dans le second corps 105 et solidaire du premier corps 102, est susceptible de déplacer le second corps 105 en translation par rapport au cadre avant 17 fixe.

Dans une variante de réalisation, ce second arbre d'entraînement 106 est, également, une vis d'entraînement 106 de type vis à billes.

Le second corps 105 de l'actionneur 100 comprend, dès lors, tout moyen adapté pour coopérer avec la vis à billes, par exemple, un écrou à billes 107.

Il est à noter que les vis à billes 104, 106 des deux arbres 104, 106 peuvent présenter des pas identiques ou différents, permettant ainsi d'attribuer à chacun des deux corps 102,105 de l'actionneur 100 une vitesse respectivement identique ou propre.

De plus, l'actionneur 100 comprend des moyens de verrouillage 120 adaptés pour, en position de verrouillage, interdire toute translation du premier corps 102 de l'actionneur 100 relativement à la base 101 tout en laissant libre sa rotation.

Comme illustré sur la figure 2 notamment, dans un mode de réalisation, les moyens de verrouillage 120 comprennent un ou plusieurs crochets 121 montés soit sur la base 101 soit sur le premier corps 102 de l'actionneur 100 et un anneau 122 en saillie monté sur la base 101 ou sur le premier corps 102 de l'actionneur 100 le cas échéant, les crochets 121 et l'anneau 122 étant des moyens de verrouillage complémentaires adaptés pour coopérer mutuellement.

Pour permettre la rotation du premier corps 102 de l'actionneur 100, l'anneau 122 est un pallier à billes.

Par ailleurs, pour entraîner le premier arbre d'entrainement 104 en rotation, on peut prévoir des moyens d'entraînement motorisés électriques (non illustrés).

Ces moyens d'entraînement comprennent un unique moteur apte à entraîner un axe unique, lui-même distribuant son mouvement à un unique arbre de sortie lié au premier arbre d'entraînement 104.

Aucun arbre de sortie relié au second arbre d'entraînement 106 n'est nécessaire pour assurer l'entraînement dudit arbre 106, comme cela est décrit ci-après.

En effet, selon l'invention, le premier et le second corps 102,105 de l'actionneur 100 sont montés en série par l'intermédiaire du second arbre d'entraînement 106 qui est monté fixe à l'extrémité aval du premier corps 102 de l'actionneur 100 et le prolonge.

De plus, les deux arbres d'entraînement 104,106 appartiennent à une même chaîne d'actionnement dans laquelle :
- lorsque les moyens de verrouillage 120 sont en position verrouillée sur le premier corps 102 de l'actionneur 100, le second arbre d'entraînement 106 assure le déplacement en translation du second corps 105 de l'actionneur 100 par rapport au premier corps 102 et,
- lorsque les moyens de verrouillage 120 sont en position déverrouillée sur le premier corps 102 de l'actionneur 100, le premier arbre d'entraînement 104 assure, à la fois, le déplacement en translation du premier et du second corps 102 de l'actionneur 100 par rapport au cadre avant 17 fixe.

Dans cette dernière position des moyens de verrouillage, le second corps 105 de l'actionneur 100 est, ainsi, lié en translation axiale vers l'aval avec le premier corps 102 de l'actionneur 100.

Grâce à la présente invention, une chaîne d'entraînement unique assure :
- le déplacement du premier corps 102 de l'actionneur 100 et, par conséquent, de la partie interne 10b du capot 10 et,
- le déplacement du second corps 105 de l'actionneur 100 et, par conséquent de la partie externe 10a du capot 10 lorsque le premier corps 102 de l'actionneur 100 est bloqué en rotation.

On diminue, par conséquent, la masse et les coûts du système d'actionnement de l'inverseur de poussée.

Le fonctionnement d'un actionneur 100 linéaire selon la présente invention est le suivant.

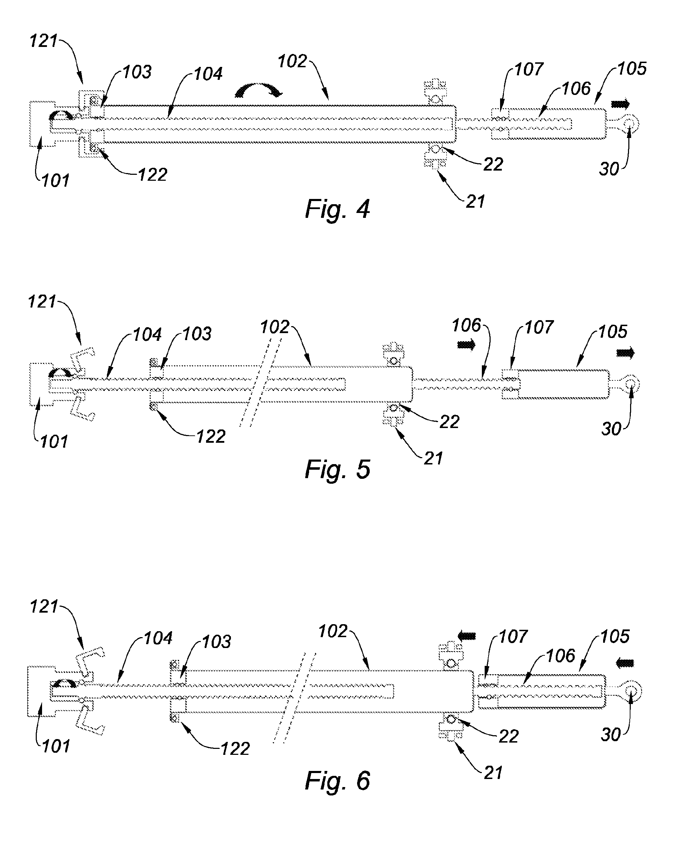

Sur la figure 4, on observe l'actionneur 100 lors d'une phase de variation de section de tuyère.

Pendant cette phase, les moyens de verrouillage 120 sont en position verrouillée sur le premier corps 102 de l'actionneur 100. Sa translation est alors interdite.

Le premier arbre d'entraînement 104 étant entraîné en rotation par le moteur, il anime le premier corps 102 de l'actionneur 100 d'un même mouvement de rotation.

Le second arbre d'entraînement 106 étant monté fixe sur le premier corps 102 de l'actionneur 100, il est également animé d'un mouvement de rotation.

Dans la mesure où le second corps 105 de l'actionneur 100 est bloqué en rotation, la rotation du second arbre d'entraînement 106 entraîne un mouvement de translation correspondant du second corps 105 de l'actionneur 100 vers l'aval de l'actionneur 100.

Ceci entraîne le déplacement, vers l'aval de l'inverseur, de la partie externe 10a du capot 10, faisant varier la section de sortie de tuyère.

A ce stade, la partie interne 10b du capot 10 est maintenue fixe en position de fermeture assurant le recouvrement des grilles de déviation 11.

Un frein peut être prévu pour verrouiller en rotation le premier arbre d'entraînement 104, ceci afin de maintenir la partie externe 10a du capot 10 dans une position intermédiaire entre sa position de section nominale de tuyère et sa position maximale en aval de l'inverseur offrant une variation maximale de section de sortie de tuyère.

Sur la figure 5, on observe l'actionneur 100 lors d'une phase d'inversion de poussée.

Pendant cette phase, la partie externe 10a du capot 10 est dans une position présentant une variation maximale de section de sortie de tuyère.

Le second corps 105 de l'actionneur 100 est ainsi déployé au maximum vers l'aval de l'actionneur 100 tout comme la partie externe 10a du capot 10 est translatée au maximum vers l'aval de l'inverseur, comme décrit en relation avec la figure 4.

A ce stade, on commande le déverrouillage des moyens de verrouillage 120. On autorise, dès lors, la translation du premier corps 102 de l'actionneur.

Le premier arbre d'entraînement 104 étant entraîné en rotation par le moteur, il anime le premier corps 102 de l'actionneur 100 d'un mouvement de translation.

Le second corps 105 de l'actionneur 100 étant déployé au maximum vers l'aval de l'actionneur 100, l'écrou à billes 107 coopérant avec le second arbre d'entraînement 106 est en fin de course, ce qui interdit toute rotation du second arbre 106 et, par conséquent, toute translation du second corps 105 de l'actionneur 100 relativement au second arbre 106 d'entraînement.

La rotation du premier arbre d'entraînement 104 conduit au déplacement en translation vers l'aval de l'actionneur 100 à la fois du premier et du second corps 102 de l'actionneur 100 par rapport au cadre avant 17 fixe.

La partie interne 10b du capot 10 est, par conséquent, déplacée vers l'aval de l'inverseur de poussée pour réaliser l'obturation de la veine 9 et l'inversion de poussée.

A la figure 6, on illustre les déplacements inverses de ceux illustrés sur la figure 5, correspondant à un retour en position de fermeture des parties interne 10b et externe 10a du capot 10 d'inversion de poussée.

L'effort appliqué aux pions latéraux 22 étant généralement plus important que celui appliqué à la chape de fixation 30 à l'extrémité aval du second corps 105 de l'actionneur 100, le premier arbre d'entraînement 104 animé d'un mouvement de rotation conduit, d'abord, à la rotation du premier corps 102 de l'actionneur 100 et du second arbre d'entraînement 106 jusqu'à la butée en bout de course de l'écrou à billes 107 coopérant avec le second arbre d'entraînement 106 à la position rétractée.

Toute rotation du second arbre d'entraînement 106 est alors interdite, ce qui entraîne une translation vers l'amont, en direction de la base 101, du premier corps 102 de l'actionneur 100.

On commande si nécessaire par la suite, le reverrouillage des moyens de verrouillage 20 sur ce premier corps 102 de l'actionneur 100.

On notera que ce système d'entraînement répond à de nombreuses exigences de sécurité et est particulièrement fiable.

En effet, les moyens de verrouillage 120 font partie du système de verrouillage à trois lignes de défense du capot 10.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

C'est ainsi par exemple que l'on pourrait envisager système à double cardan en lieu et place du système à bielles 23 et palonnier 14 décrit plus haut : c'est cinématiquement équivalent mais permet de placer la reprise d'efforts dans une direction très proche de celle de l'axe du vérin et donc de réduire les efforts parasites.

On peut utiliser plusieurs actionneurs linéaires double action selon la présente invention pour un seul et même capot d'inverseur de poussée.

Comme précédemment indiqué, l'actionneur linéaire double action selon la présente invention peut être utilisé dans d'autres applications.

## Revendications

1. Actionneur (100) linéaire double action pour déplacer un premier élément (10b) et un deuxième élément (10a) relativement à un élément fixe (17), ledit actionneur comprenant :
- un premier élément tubulaire (102) muni de moyens (21,22,23,24,25) adaptés pour rattacher ledit premier élément tubulaire (102) au premier élément (10b) à déplacer,
- un premier arbre d'entraînement (104), logé dans le premier élément tubulaire (102) susceptible de déplacer le premier élément tubulaire (102) en translation par rapport à l'élément fixe (17),
- un deuxième élément tubulaire (105) comportant un moyen (30) adapté pour le rattacher au deuxième élément (10a) à déplacer et,
- un deuxième arbre d'entraînement (106), logé dans le deuxième élément tubulaire (105), susceptible de déplacer le deuxième élément tubulaire (105) en translation par rapport à l'élément fixe (17),
**caractérisé en ce que** les deux éléments tubulaires (102,105) sont montés en série par l'intermédiaire du deuxième arbre d'entraînement (106) qui est monté fixe sur le premier élément tubulaire (102), de sorte que les deux arbres d'entraînement (104,106) appartiennent à une même chaîne d'actionnement dans laquelle le deuxième arbre d'entraînement (106) assure le déplacement en translation du deuxième élément tubulaire (105) par rapport au premier élément tubulaire (102) lorsque des moyens de verrouillage (120) du premier élément tubulaire (102) sont en position verrouillée et dans laquelle le premier arbre d'entraînement (104) assure, à la fois, le déplacement en translation du premier élément tubulaire (102) et du deuxième élément tubulaire (105) par rapport à l'élément fixe (17) lorsque les moyens de verrouillage (120) sont en position déverrouillée.

2. Actionneur selon la revendication 1 **caractérisé en ce qu'**il comprend une base (101) destinée à être rattachée à l'élément fixe (17) et supportant le premier arbre d'entraînement (104).

3. Actionneur selon la revendication 2 **caractérisé en ce que** le premier arbre d'entraînement (104) est montée mobile en rotation relativement à la base (101).

4. Actionneur selon la revendication 2 **caractérisé en ce que** les moyens de verrouillage (120) sont adaptés pour, en position de verrouillage, interdire toute translation du premier élément tubulaire (102) relativement à la base (101) tout en laissant libre sa rotation par rapport à cette dernière.

5. Actionneur selon la revendication 1 **caractérisé en ce que** le moyen (30) adapté pour rattacher le second élément tubulaire (105) au second élément (10a) sont adaptés pour bloquer en rotation le second élément tubulaire (105).

6. Actionneur selon la revendication 1 **caractérisé en ce que** les moyens (21,22,23,24,25) adaptés pour rattacher ledit premier élément tubulaire (102) au premier élément (10b) à déplacer sont adaptés pour autoriser la rotation du premier élément tubulaire (102).

7. Actionneur selon la revendication 6 **caractérisé en ce que** les moyens (21,22,23,24,25) adaptés pour rattacher ledit premier élément tubulaire (102) au premier élément (10b) à déplacer comprennent des pions (21) connectés d'une part au premier élément (102) par l'intermédiaire d'un roulement ou palier à bille (22) et, d'autre part, par un ensemble bielles-palonnier (24) monté sur le premier élément (10b) à déplacer.

8. Actionneur selon la revendication 6, **caractérisé en ce que** lesdits moyens adaptés pour rattacher ledit premeir élément tubulaire (102) au premier élément (10b) comprennent un double cardan.

9. Actionneur selon l'une des revendications 1 à 8 **caractérisé en ce que** les premier et second arbres d'entraînement (104,106) sont des vis à billes.

10. Actionneur selon la revendication 9 **caractérisé en ce que** les pas des vis à billes peuvent être différents.

11. Actionneur selon l'une des revendications 1 à 8 **caractérisé en ce qu'**il comprend un moteur d'entraînement unique avec un arbre de sortie unique animant uniquement le premier arbre d'entraînement (104).

12. Inverseur de poussée pour nacelle de turboréacteur comprenant, d'une part, des moyens de déviation d'au moins une partie d'un flux d'air du turboréacteur, et d'autre part, au moins un capot mobile en translation selon une direction sensiblement parallèle à un axe longitudinal de la nacelle apte à passer alternativement d'une position de fermeture dans laquelle il assure la continuité aérodynamique de la nacelle et couvre les moyens de déviation, à une position d'ouverture dans laquelle il ouvre un passage dans la nacelle et découvre les moyens de déviation, le capot mobile comprenant au moins une partie extrême formant tuyère, ladite partie étant montée mobile en translation par rapport au reste du capot, **caractérisé en ce qu'**il comprend également un actionneur selon l'une des revendications 1 à 11 permettant le déplacement du capot mobile et de la tuyère.

## Patentansprüche

1. Doppeltwirkender Linearantrieb (100) zum Bewegen eines ersten Elements (10b) und eines zweiten Elements (10a) in Bezug auf ein festes Element (17), wobei der besagte Antrieb folgendes umfasst:
- ein erstes rohrförmiges Element (102), das mit Mitteln (21, 22, 23, 24, 25) versehen ist, um das besagte erste rohrförmige Element (102) an das erste zu bewegende Element (10b) anzuschließen,
- eine erste Antriebswelle (104), die im ersten rohrförmigen Element (102) untergebracht ist, und imstande ist, das erste rohrförmige Element (102) in einer Vorschubbewegung im Verhältnis zum festen Element (17) zu bewegen,
- ein zweites rohrförmiges Element (105), ein Mittel (30) umfassend, das sich dazu eignet, um es an das zweite zu bewegende Element (10a) anzuschließen, und
- eine zweite Antriebswelle (106), die im zweiten rohrförmigen Element (105) untergebracht ist, und imstande ist, das zweite rohrförmige Element (105) in einer Vorschubbewegung im Verhältnis zum festen Element (17) zu bewegen,
**dadurch gekennzeichnet, dass** die beiden rohrförmigen Elemente (102, 105) über die zweite Antriebswelle (106) in Reihe montiert sind, die fest auf dem ersten rohrförmigen Element (102) montiert ist, sodass die beiden Antriebswellen (104, 106) einer selben Antriebskette angehören, in der die zweite Antriebswelle (106) für die Vorschubbewegung des zweiten rohrförmigen Elements (105) im Verhältnis zum ersten rohrförmigen Element (102) sorgt, wenn sich die Verriegelungsmittel (120) des ersten rohrförmigen Elements (102) in der verriegelten Position befinden, und in der die erste Antriebswelle (104) zugleich für die Vorschubbewegung des ersten rohrförmigen Elements (102) und des zweiten rohrförmigen Elements (105) im Verhältnis zum festen Element (17) sorgt, wenn sich die Verriegelungsmittel (120) in der entriegelten Position befinden.

2. Antrieb nach Anspruch 1, **dadurch gekennzeichnet, dass** er eine Basis (101) umfasst, die dazu bestimmt ist, an das feste Element (17) angeschlossen zu werden, und die die erste Antriebswelle (104) trägt.

3. Antrieb nach Anspruch 2, **dadurch gekennzeichnet, dass** die erste Antriebswelle (104) im Verhältnis zur Basis (101) drehbar montiert ist.

4. Antrieb nach Anspruch 2, **dadurch gekennzeichnet, dass** sich die Verriegelungsmittel (120) dazu eignen, um in der Verriegelungsposition jede Vorschubbewegung des ersten rohrförmigen Elements (102) im Verhältnis zur Basis (101) zu unterbinden, jedoch dessen Drehbewegung im Verhältnis zu letzterer zu ermöglichen.

5. Antrieb nach Anspruch 1, **dadurch gekennzeichnet, dass** das Mittel (30), das sich dazu eignet, das zweite rohrförmige Element (105) an das zweite Element (10a) anzuschließen, dazu geeignet ist, um die Drehbewegung des zweiten rohrförmigen Elements (105) zu blockieren.

6. Antrieb nach Anspruch 1, **dadurch gekennzeichnet, dass** sich die Mittel (21, 22, 23, 24, 25) die sich dazu eignen, das besagte erste rohrförmige Element (102) an das erste zu bewegende Element (10b) anzuschließen, dazu eignen, um die Drehbewegung des ersten rohrförmigen Elements (102) zu erlauben.

7. Antrieb nach Anspruch 6, **dadurch gekennzeichnet, dass** die Mittel (21, 22, 23, 24, 25) die sich dazu eignen, das besagte erste rohrförmige Element (102) an das erste zu bewegende Element (10b) anzuschließen, Stifte (21) umfassen, die einerseits über ein Lager oder ein Kugellager (22), und andererseits über eine Einheit an Hebelgestängen (24), das auf dem ersten zu bewegenden Element (10b) montiert ist, mit dem ersten Element (102) verbunden sind.

8. Antrieb nach Anspruch 6, **dadurch gekennzeichnet, dass** sich die besagten Mittel, die sich dazu eignen, um das besagte erste rohrförmige Element (102) an das erste Element (10b) anzuschließen, eine doppelte kardanische Lagerung umfassen.

9. Antrieb nach einem der Ansprüche 1 bis 8, **dadurch gekennzeichnet, dass** die erste und zweite Antriebswelle (104, 106) Kugelrollspindeln sind.

10. Antrieb nach Anspruch 9, **dadurch gekennzeichnet, dass** die Steigungen der Kugelrollspindel unterschiedlich sein können.

11. Antrieb nach einem der Ansprüche 1 bis 8, **dadurch gekennzeichnet, dass** er einen einzigen Antriebsmotor mit einer einzigen Antriebswelle umfasst, die nur die erste Antriebswelle (104) antreibt.

12. Schubumkehr für eine Turbotriebwerksgondel, einerseits Mittel zum Umleiten zumindest eines Teils des Luftstroms des Turbotriebwerks umfassend, und andererseits zumindest eine in eine Vorschubrichtung bewegliche Abdeckung, die in etwa parallel zu einer Längsachse der Gondel verläuft, und in der Lage ist, alternierend von einer Schließposition, in der sie für die aerodynamische Kontinuität der Gondel sorgt, und die Umleitmittel abdeckt, in eine Öffnungsposition überzugehen, in der sie einen Durchlass in der Gondel öffnet, und die Umleitmittel enthüllt, wobei die bewegliche Abdeckung zumindest einen Endabschnitt umfasst, der eine Düse bildet, wobei der besagte Abschnitt im Verhältnis zum Rest der Abdeckung in Vorschubrichtung beweglich montiert ist, **dadurch gekennzeichnet, dass** sie auch einen Antrieb nach einem der Ansprüche 1 bis 11 umfasst, der die Bewegung der beweglichen Abdeckung und der Düse ermöglicht.

## Claims

1. A double-acting linear actuator (100) for displacing a first element (10b) and a second element (10a) relative to a fixed element (17), said actuator comprising
- a first tubular element (102) provided with means (21, 22, 23, 24 ,25) adapted for fastening said first tubular element (102) to the first element (10b) to displace,
- a first drive shaft (104), housed in the first tubular element (102), capable of displacing the first tubular element (102) in translation relative to the fixed element (17),
- a second tubular element (105) including a means (30) adapted for fastening it to the second element (10a) to displace, and
- a second drive shaft (106), housed in the second tubular element (105), capable of displacing the second tubular element (105) in translation relative to the fixed element (17),
**characterized in that** the two tubular element (102, 105) are mounted in series by means of the second drive shaft (106) which is fixedly mounted on the first tubular element (102), so that the two drive shafts (104, 106) belong to one single actuating chain wherein the second drive shaft (106) ensures the translational displacement of the second tubular element (105) relative to the first tubular element (102) when locking means (120) of the first tubular element (102) are in the locked position and wherein the first drive shaft (104) ensures the translational displacement of both the first tubular element (102) and the second tubular element (105) relative to the fixed element (17) when the locking means (120) are in the unlocked position.

2. The actuator according to claim 1, **characterized in that** it comprises a base (101) intended to be fastened to the fixed element (17) and supporting the first drive shaft (104).

3. The actuator according to claim 2, **characterized in that** the first drive shaft (104) is mounted movable in rotation relative to the base (101).

4. The actuator according to claim 2, **characterized in that** the locking means (120) are adapted so as to prevent, when in the locked position, any translation of the first tubular element (102) relative to the base (101) while allowing its free rotation relative to the latter.

5. The actuator according to claim 1, **characterized in that** the means (30) adapted for fastening the second tubular element (105) to the second element (10a) are adapted for blocking in rotation the second tubular element (105).

6. The actuator according to claim 1, **characterized in that** the means (21, 22, 23, 24, 25) adapted for fastening said first tubular element (102) to the first element (10b) to displace are adapted for enabling the rotation of the first tubular element (102).

7. The actuator according to claim 6, **characterized in that** the means (21, 22, 23, 24, 25) adapted for fastening said first tubular element (102) to the first element (10b) to displace comprise pins (21) connected, on the one hand, to the first element (102) by means of a ball-type bearing or rolling (22) and, on the other hand, by a connecting rods-rudder bar assembly (24) mounted on the first element (10b) to displace.

8. The actuator according to claim 6, **characterized in that** said means adapted for fastening said first tubular element (102) to the first element (10b) comprise a double-cardan joint.

9. The actuator according to any of claims 1 to 8, **characterized in that** the first and second drive shafts (104, 106) consist of ball screws.

10. The actuator according to claim 9, **characterized in that** the pitches of the ball screws may be different.

11. The actuator according to any of claims 1 to 8, **characterized in that** it comprises one single drive motor with one single output shaft which drives only but the first drive shaft (104).

12. A thrust reverser for a nacelle of a turbojet engine comprising, on the one hand, means for diverting at least one portion of an air flow of the turbojet engine, and on the other hand, at least one cowl movable in translation along a direction substantially parallel to a longitudinal axis of the nacelle capable of alternatively switching from a closed position wherein it ensures the aerodynamic continuity of the nacelle and covers the diverting means, to an open position wherein it opens a passage in the nacelle and uncovers the diverting means, the movable cowl comprising at least one extreme portion forming a nozzle, said portion being mounted movable in translation relative to the rest of the cowl, **characterized in that** it also comprises an actuator according to any of claims 1 to 11 which allows displacing the movable cowl and the nozzle.
